# EUROPEAN PATENT APPLICATION

(11) **EP 2 933 615 A1**
(43) Date of publication of application: **21.10.2015**
(21) Application number: 15163926.7
(22) Date of filing: 16.04.2015
(51) Int. Cl.: G01G 19/32, B65B 57/14, B65B 1/32, B65B 1/42, B65B 25/00, B65B 35/54, B65B 1/06, B65B 1/08

(54) **SYSTEM AND METHOD FOR BATCHING AND/OR WEIGHING A PLURALITY OF PRODUCTS**

(30) Priority: 18.04.2014 IT MI20140736
(71) Applicant: Ilapak Italia S.p.A., 52045 Foiano Della Chiana (AR) (IT)
(72) Inventor: Perugini, Gianni, 52043 Castiglion Fiorentino (AR) (IT); Rugo, Alessio, 06132 Perugia (PG) (IT); Alessandri, Alessandro, 52100 Arezzo (AR) (IT)
(74) Representative: Bonatto, Marco

(57) **Abstract**

The system (1') comprises at least one weighing and/or batching branch (R1-R4), which in turn comprises a synchronization stage (SS), comprising A) a first (7') and one second transport track (7") arranged for conveying a flow of products (PR1-PR4), B) a synchronization bucket (9) arranged for receiving the flow of products (PR1-PR4) coming from the first (7') and from the second transport track (7"). The first (7') and the second transport track (7") feed, substantially in parallel, the synchronization bucket (9) with their flows of products (PR1-PR4). The synchronization bucket (9) mixes the flows of products (PR1-PR4) coming from the first (7') and from the second transport track (7"). The weighing and/or batching branch (R1-R4) also comprises a movable barrier (8) arranged for reversibly blocking the flow of products conveyed at least by the first (7') or by the second transport track (7").

## Description

### Field of the invention

The present invention relates to an automatic weighing system of so-called "buckets" type, usable for example for the automatic packaging of assorted food products such as cookies, sweets, snacks, frozen foods, fresh or cooked vegetables, and cheeses.

### State of the art

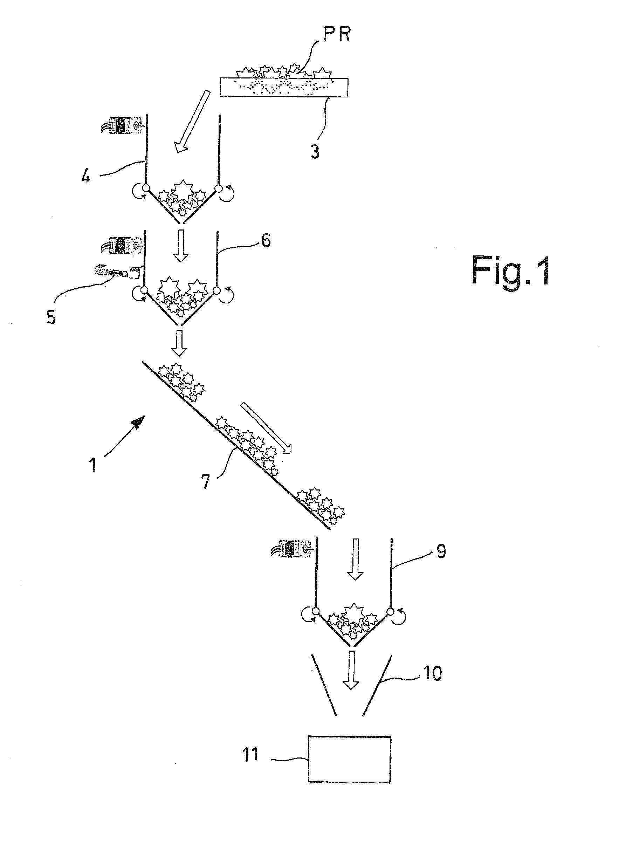

Figure 1 shows an example of a known buckets system, referred to with the overall reference 1, for the automatic weighing and packaging of food products PR, such as assorted cookies or sweets. The product to be weighed and packaged reaches the system 1 for example by means of a vibrating channel 3, from which it falls into the first batching bucket 4. The vibrating channel carries out the dosage of the products PR which fall into the first batching bucket 4. The buckets 4, 6 and 9 are arranged in sequence and provided with openable bottom in order to unload, by falling, their own content into the bucket immediately downstream. The batching bucket 4 unloads into the weighing bucket 6, which is supported by a weighing unit 5 which weighs the bucket 6 itself. The weighing system 1 is provided with several copies of the previous cascade of batching and weighing buckets, which can feed, in parallel to each other, a single timing or synchronization bucket 9; such timing or synchronization bucket 9 compacts the product PR and preserves it until the correct instant of release into the connection channel 10 with the packaging machine 11. The product PR is transported from the weighing bucket 6 to the synchronization bucket 9 by means of a chute 7 often shared by several weighing buckets 6. Ideally, the plant 1 can be divided into a batching stage, comprising the vibrating channel 3 and the batching bucket 4, a weighing stage comprising the weighing bucket 6 and a synchronization stage comprising the chute 7 and the synchronization bucket 9. Generally, the slowest stage is the synchronization stage: considering in fact the physical inclination constraints of the chutes 7 for obtaining the conveyance of the product PR towards the synchronization bucket and the constraints set by the minimum distance from the packaging machine, the fall time of the product PR is non-negligible and generally limits the maximum work frequency of the overall system 1. For overcoming this drawback, a known solution is anticipating the unloading of the weighing bucket 6 by simultaneously passing, over a same chute 7, several combinations of different product PR releases, unloading a second product PR2 from the weighing bucket 6 on the chute 7 when a preceding sequence PR1 is still present in the chute 7. The size of the advance time must be such that the two consecutive releases of the weighing bucket maintain a mutual distance of the two products PR1 and PR2 on the chute 7 such to correctly separate them. Assuming that the packaging machine 11 has a smaller floor to floor time than the weighing stage, in such a way that the products are unloaded from the synchronization bucket without wait times, so that at each opening the weighing bucket unloads on the chute 7 a single product piece, and that there is uniform friction on the chute 7, the distance between the two masses of products PR1 and PR2 on the chute 7 is univocally determined by the time interval between the two releases of the weighing bucket or buckets 6.

In order to reduce the floor to floor time of the weighing system 1, it is sought to reduce such distance to a minimum while separating the two consecutive releases in such a way that the chute 7 can separately unload them into the synchronization bucket 9. If instead, at each opening, the weighing bucket unloads a fragmented and loose mass of several products PR on the chute 7, due to stochastic physical phenomena mainly due to the non-ideal nature of the chute and the type and composition of the unloaded product, the distance between the closest points of the two releases on the chute 7 tends to be reduced, a phenomenon called "product elongation"; clearly separating the two releases by managing the opening and closing times of the synchronization bucket is more complex and requires lengthening, for precautionary purposes, the time intervals between two successive releases in order to avoid them be mixed on the chute 7, consequently lengthening the floor to floor time of the synchronization stage and of the whole weighing system 1. A mixing on the same chute 7 of two different product charges is rather undesired, since it causes an undesired variation of the weight and composition of the final packaged product, such variation often not readily detectable by the automatic control systems.

An object of the present invention is overcoming the abovementioned drawbacks of the known weighing systems, and in particular supplying a weighing system that allows the unloading frequency of the weighing stage be increased, reducing the overall floor to floor time of the plant.

### Summary of the invention

In a first aspect of the present invention, such object is achieved with a system for batching and/or weighing a plurality of products having the features according to claim 1.

In a second aspect of the present invention, such object is achieved with a process for batching and/or weighing a plurality of products having the features according to claim 11.

Further features of the device are the subject of the dependent claims.

The advantages attainable with the present invention will be clearer, to the skilled person, from the following detailed description of some particular nonlimiting embodiments, described with reference to the following schematic figures.

### List of the Figures

Figure 1 shows a side schematic view of a batching and weighing system of known type, for feeding a packaging machine;
Figure 2 shows a side schematic view of a batching and weighing system according to a first particular embodiment of the invention;
Figure 3 shows a top view of the chutes of the weighing system of figure 2;
Figure 4 shows a perspective view of a batching bucket and of a weighing bucket of the system of figure 2;
Figure 5 shows a first perspective view, with the movable barrier lowered, of some transport tracks of the synchronization stage of a second particular embodiment of a weighing system according to the invention;
Figure 6 shows a second perspective view of the synchronization stage of figure 5, with the movable barrier raised.

### Detailed description

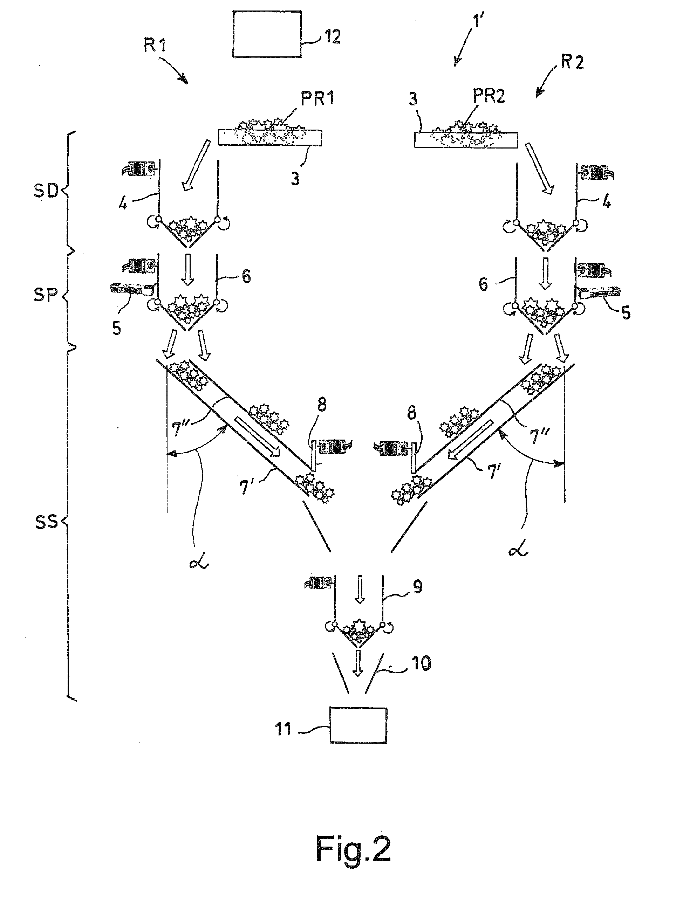

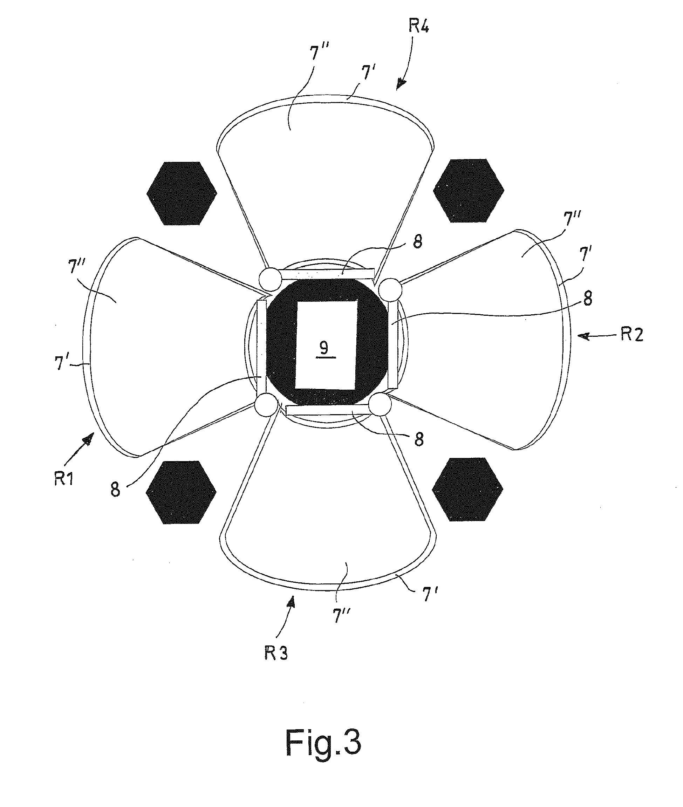

Figures 2-4 are relative to a batching and/or weighing system according to a first particular embodiment of the invention; such system is referred to with the overall reference 1' and is suitable for feeding a packaging machine 11, for example.
The weighing system 1' can be used for example for batching, weighing and mixing one or more loose and fragmented flows of suitable products, such as cookies, sweets, snacks, frozen foods, fresh vegetables or cheese.
The weighing system 1' comprises four batching and weighing branches R1, R2, R3, R4, each of which in turn comprising at least one batching stage SD, at least one weighing stage SP and one synchronization stage SS.

The batching stage SD can for example comprise a feeding track 3, such as a vibrating channel, and comprises a batching bucket 4. By varying the time intervals and the amplitude of its vibrations, the vibrating channel 3 regulates the quantity of product PR1 that it unloads in the batching bucket.
The weighing stage SP comprises a weighing bucket 6.
The synchronization stage SS can comprise:
- at least a first 7' and a second transport track 7" each arranged for conveying a flow of products PR1 or PR2 intended for example to be packaged more downstream by a possible packaging machine 11; and
- a synchronization bucket 9 arranged for collecting and mixing the flows of the products PR1, PR2 coming from the first 7' and/or from the second transport track 7" of the various batching and weighing branches R1-R4, such branches feeding, in parallel to each other, the synchronization bucket 9.

According to an aspect of the invention, the first 7' and the second transport track 7" feed, substantially in parallel, the synchronization stage SS with their own flows of products PR1, PR2; in the present embodiment, the transport tracks 7', 7" of each branch R1 or R2 feed, in parallel to each other, the synchronization stage SS, and in particular its synchronization bucket 9. Each transport track 7', 7" can for example comprise a simple gravity chute. Each chute and more generally each track 7', 7", even if it does not comprise chutes, can have a tilt α [alpha], with respect to the vertical, e.g. comprised between 35°-70° and more preferably between 45°-60° degrees (Figure 2).

The synchronization stage SS is arranged for mixing together the flows of products PR1 or PR2 coming from the first 7' and from the second transport track 7", e.g. made to fall from the chutes 7', 7" of each weighing branch in the synchronization bucket 9. Still according to one aspect of the invention, the weighing system 1' comprises at least one movable barrier 8 arranged for reversibly blocking the flow of products conveyed at least by a first 7' or by a second transport track 7".

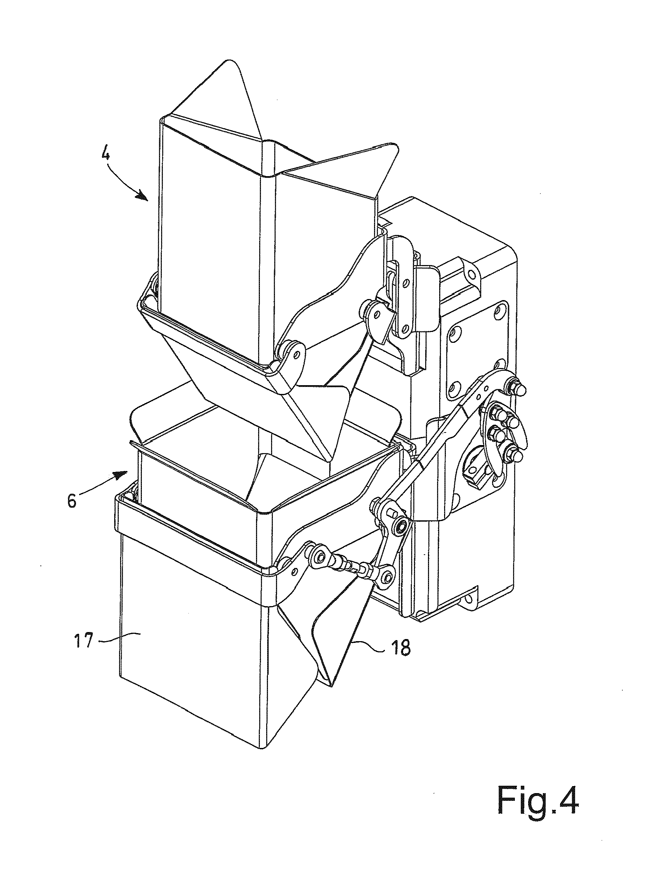

Preferably each weighing bucket 6 is arranged to feed both a first 7' and a second transport track 7". For such purpose, it can be structurally attained as shown in Figure 4, in a manner so as to allow the products PR1 or PR2 to fall on the first transport track 7' by suitably opening or closing the openable doors 17 or 18 which reversibly close the bottom of the bucket itself. The buckets 4, 6, 9 are open at the upper part so as to be able to receive the products PR1 or PR2 that fall therein.

Advantageously a first 7' and a second transport track 7" are arranged side-by-side one to another and overlapped in a substantially vertical direction, even if suitably spaced, such that they can both be selectively fed by a same fixed bucket 6. More particularly, a first 7' and a second transport track 7" are extended vertically overlapped and side-by-side each other. Each movable barrier 8 can comprise a gate or door that, by translating or rotating, reversibly closes the first 7' or the second transport track 7", blocking the inflow of the products PR1 or PR2 conveyed thereby.

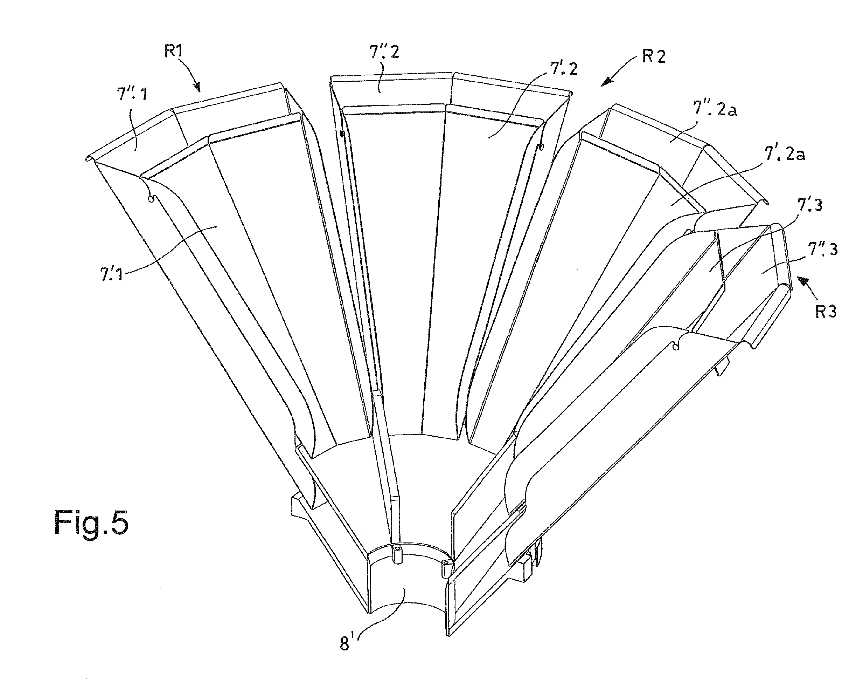

Figure 5 shows a possible mechanical embodiment of a synchronization stage SS portion, and in particular the mechanical construction of its chutes. In particular, each batching and weighing branch R1-R4 can comprise not only a couple of transport tracks, made in the form of chutes -e.g. 7'.1, 7".1- vertically superimposed with each other, but also several couples of chutes -or other transport tracks- two-by-two horizontally side-by-side and overlapped, for example 7'.2, 7".2, 7'.2a, 7".2a. More particularly such chutes extend vertically overlapped and side-by-side one to another. Correspondingly, each chute or other transport track 7'.1, 7".1, 7'.2, 7".2, 7'.2a, 7".2a can be fed not only by a single batching and/or weighing bucket, but also by several batching 4 and/or weighing buckets 6.

An example of operation of the above-described weighing system 1' is now described.
The feeder 3 of each feeding branch R1-R4 makes a flow of products, respectively PR1-PR4, fall into a respective batching bucket 4, which in turn allows the received product batch to fall into a respective and underlying weighing bucket 6.

By means of the weighing unit 5, the weighing bucket determines with the desired precision the weight of the received product batch PR1-PR4 after which, based on the instructions of a suitable logic unit 12 which controls the system 1, by suitably opening the bottom door 17 or the door 18 unloads its content of product on the first 7' or on the second transport track 7".
A batch of product PR1 slides or in any case advances on the track 7' while, in parallel on the track 7", a second batch of product PR1 advances that was previously unloaded by the same weighing bucket 6.

A respective movable barrier 8 is positioned in a manner so as to block, for example, the second transport track 7", preventing the product PR1 that advances therealong from falling into the synchronization bucket 9, at the same time however leaving the first transport track 7' open (Figure 2). The batch of product that reaches the downstream end of the track 7' can then fall into the synchronization bucket 9.
After the product batch PR1 has been unloaded into the bucket 9 from the track 7' of the batching and weighing branch R1, and the product batch PR2, PR3, PR4 has been unloaded from the track 7' respectively of the batching and weighing branch R2, R3, R4, the synchronization bucket 9 further compacts the product, i.e. it accumulates and remixes in a smaller volume a product quantity that was previously spread along a section of greater length on the chutes 7', 7"; after this, by opening its own bottom it unloads the mixed products into the packaging machine 11, e.g. allowing them to fall therein.

Subsequently, the four movable barriers 8 are lowered, or in any case are moved following a suitable command of the logic unit 12, in a manner so as to open the second transport tracks 7" and close the first tracks 7'. The four batches of the products PR1-PR4 which advanced along the second tracks 7" fall -or in any case flow- into the synchronization bucket 9. After having mixed and unloaded these four batches from the synchronization bucket 9, the position of the movable barriers 8 is once again switched by repeating the above-described operation cycle.

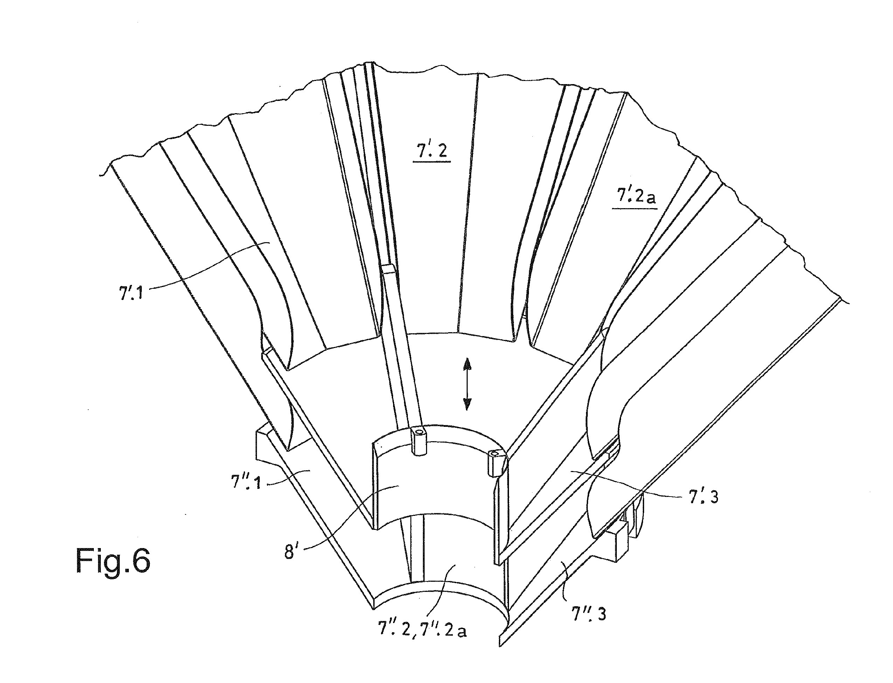

Figure 6 shows a practical example of a movable barrier 8' which simultaneously opens or closes the upper chutes 7', 7'.1-7'.4 of all the branches R1-R4 or the lower chutes 7", 7".1-7".4 of all the branches R1-R4, without however being able to simultaneously close or open both the lower chutes and the upper chutes.
The synchronization stage SS is provided with a single movable barrier 8' with substantially tubular form: in raised position (Figure 6), it simultaneously closes the downstream ends of the upper chutes 7', 7'.1-7'.4 of all the branches R1-R4, leaving open the downstream ends of the lower chutes 7", 7".1-7".4 of all the branches R1-R4. Viceversa in lowered position (Figure 5) the barrier 8' simultaneously closes the downstream ends of the lower chutes 7", 7".1-7".4 of all the branches R1-R4, leaving open the downstream ends of the upper chutes 7', 7'.1-7'.4, with a mechanical construction that is very simple, effective and reliable.

Since a couple of transport tracks 7', 7" can transport in parallel without the risk of mixing two charges, or batches, of products unloaded from a single weighing bucket 6 -or even from a batching bucket 4, or yet another type of bucket -situated more upstream, such weighing bucket 6 and the relative batching bucket that feeds it can unload its own content at higher frequency, approximately double with respect to the known plant like that of figure 1, considerably increasing the floor to floor time of the whole weighing system 1, while maintaining minimum distances that are sufficiently high between two successive product charges deposited on a same transport track 7' or 7".

The risks of accidentally mixing two successive product charges deposited on a same transport track 7' or 7" are equal to or less than the risks entailed by the known plant 1 of figure 1. The fact that the first 7' and the second 7" tracks extend superimposed with respect to each other allows obtaining machines that are not very bulky, while being able to manage a great number of parallel flows of products to be packaged.

The above-described embodiments can undergo several modifications and variations, without departing from the scope of the present invention. For example, a batching and/or weighing system according to the invention can also be provided with only one weighing and/or batching branch, or with a number of weighing and/or batching branches that differs from four. The movable barriers 8 can be arranged for simultaneously closing both a first 7' and a second transport track 7", or each track 7', 7" can be provided with its own movable barrier 8 that opens and closes it independent of whether the adjacent track 7", 7' is closed or open: the latter solution, in a weighing system 1' with several weighing and batching branches R1-R4 in parallel to each other, allows feeding the synchronization bucket 9 with a much greater variety of product charges, and varying with greater freedom the composition of the product charges that reach the bucket 9, for example with respect to the embodiment of figure 2. In addition, all details can be substituted by technically equivalent elements. For example, the materials used, as well as the sizes, can be of any type in accordance with the technical requirements. It must be intended that an expression of the type "A *comprises* B, C, D" or "A *is formed by* B, C, D" also comprises and describes the particular case in which "A *is constituted by* B, C, D". The embodiments and lists of possible variants of the present application are to be intended as non-exhaustive lists.

## Claims

1. System (1') for batching and/or weighing a plurality of products (PR1-PR4), comprising at least one weighing and/or batching branch (R1-R4), which in turn comprises a synchronization stage (SS), which in turn comprises:
- at least one first (7') and one second transport track (7") each arranged for conveying a flow of products (PR1-PR4);
- a synchronization bucket (9) arranged for receiving the flow of products (PR1-PR4) coming from the at least one first (7') and from the second transport track (7");
and **characterized in that**:
- the first (7') and the second transport track (7") feed, substantially in parallel, the synchronization bucket (9) with their flows of products (PR1-PR4);
- the synchronization bucket (9) is arranged for mixing or at least jointing together the flows of products (PR1-PR4) coming from the first (7') and from the second transport track (7");
- the weighing and/or batching branch (R1-R4) also comprises at least one movable barrier (8) arranged for reversibly blocking the flow of products conveyed at least by the first (7') or by the second transport track (7");
- during its normal operation, the at least one first (7') and the second transport track (7") are extended substantially superimposed on each other.

2. System (1') according to claim 1, comprising a plurality of weighing and/or batching branches (R1-R4) which feed the synchronization bucket (9) in parallel with their flows of products (PR1-PR4).

3. System (1') according to claim 1, comprising at least one batching (4) and/or weighing (6) bucket, each of which feeds in parallel a first (7') and a second transport track (7") with a product (PR1-PR4) to be processed.

4. System (1') according to claim 1, wherein the at least one movable barrier (8) is arranged for carrying out one or more of the following operations:
- closing a first transport track (7') by blocking the inflow of products (PR1-PR4) to the synchronization bucket (9) and simultaneously leaving open a second transport track (7") that is adjacent to and possibly overlapped on the first transport track (7'), allowing the inflow of products (PR1-PR4) from the second transport track (7") to the synchronization bucket (9);
- simultaneously closing or opening both a first (7') and a second transport track (7") so as to respectively block or allow the inflow of products (PR1-PR4) from both tracks (7', 7") to the synchronization bucket (9); wherein the first and the second transport track (7" belong to a same weighing and/or batching branch (R1-R4) .

5. System (1') according to claim 1, wherein both the first (7') and the second transport track (7") are each provided with their own movable barrier (8) arranged for closing the respective first (7') or second transport track (7") independent of whether the other movable barrier (8) opens or closes the respective other second (7") or first transport track (7'), wherein the first and the second transport track (7" belong to a same weighing and/or batching branch (R1-R4) .

6. System (1') according to claim 1, wherein the at least one weighing and/or batching branch (R1-R4) comprises a batching bucket (4) and a weighing bucket (6) fed with products (PR1-PR4) to be processed by the batching bucket (4).

7. System (1') according to claim 1 or 7, wherein the batching bucket (4), the weighing bucket (6) and/or the synchronization bucket (9) are provided with an openable bottom arranged for unloading, by falling, the content of the bucket itself.

8. System (1') according to claim 8, wherein the batching bucket (4), the weighing bucket (6) and/or the synchronization bucket (9) are each provided with a couple of doors (17, 18) arranged for reversibly opening the openable bottom of the relative bucket (4, 6, 9).

9. System (1') according to claim 1, wherein one or more first (7') and second transport tracks (7") each comprise a chute.

10. System (1') according to claim 1, wherein each chute (7', 7") has an average or maximum tilt (α, alpha), with respect to the vertical, comprised between 35-70 degrees.

11. Process for batching and/or weighing a plurality of products (PR1-PR4), comprising the following operations:
- providing a batching system having the features according to claim 1;
- transporting a first flow of products to be processed (PR1-PR4) on the first transport track (7'), and a second flow of products to be processed (PR1-PR4) on the second transport track (7");
- activating the at least one movable barrier (8) so as to prevent the inflow of products to be processed (PR1-PR4) from the first transport track (7') to the synchronization bucket (9), at least when the synchronization bucket (9) is receiving products to be processed (PR1-PR4) from the second transport track (7"), and so as to prevent the inflow of products to be processed (PR1-PR4) from the second transport track (7") to the synchronization bucket (9) at least when the synchronization bucket (9) is receiving products to be processed (PR1-PR4) from the first transport track (7').
